# DEMANDE DE BREVET EUROPEEN

(11) **EP 1 195 295 A1**
(43) Date de publication de la demande: **10.04.2002**
(21) Numéro de dépôt: 01402533.2
(22) Date de dépôt: 01.10.2001
(51) Int. Cl.: B60Q 1/12

(54) **Ensemble d'éclairage à modulation d'intensité lumineuse, de faible encombrement**

(30) Priorité: 05.10.2000 FR 0012721
(71) Demandeur: VALEO VISION, 93012 Bobigny Cédex (FR)
(72) Inventeur: Leleve, Joel, 93012 Bobigny Cedex (FR)
(74) Mandataire: Hervouet, Sylvie

(57) **Abrégé**

L'invention concerne un ensemble d'éclairage de véhicule automobile incluant un projecteur (10,20) et des moyens de commande (50,60) aptes à mettre en oeuvre au moins deux modes d'alimentation correspondant à deux intensités lumineuses différentes et non nulles de ce projecteur (10,20), caractérisé en ce que ce projecteur (10,20) est un projecteur apte à engendrer un faisceau venant enrichir un autre faisceau.

## Description

L'invention concerne les moyens d'éclairage avant de véhicules automobiles comprenant un projecteur d'enrichissement, c'est à dire comprenant un projecteur destiné à intervenir dans des conditions particulières de pénombre pour superposer un éclairage supplémentaire à l'éclairage permanent fourni par un projecteur de base.

Le projecteur d'enrichissement est conçu pour superposer l'enrichissement dans une zone du faisceau de base qui est spécifiquement choisie en fonction du type de conditions particulières (autoroute ou « Motorway Lighting », ville ou « Town Lighting », mauvaises conditions météorologiques ou « Adverse Weather Lighting », virage ou « Bending Lighting »).

On entend donc ici, par projecteur d'enrichissement, un projecteur qui génère un faisceau de répartition insuffisamment large pour un éclairage correct à lui seul de la route, mais qui fournit, lorsque superposé à un faisceau de base de bonne largeur, un éclairage de la route performant.

On sait que l'ajout d'un ou de plusieurs projecteurs d'enrichissement à un projecteur de base génère un encombrement non souhaitable.

On a certes proposé une solution alternative au projecteur d'enrichissement dans le document FR 2 526 258. Selon cette solution, on génère un flux lumineux plus intense en alimentant plus fortement le projecteur de base sous les dites conditions particulières de pénombre.

Bien que l'encombrement soit effectivement réduit, les performances optiques alors obtenues sont faibles.

L'invention vise un tel moyen d'éclairage incluant un projecteur commandé selon deux modes d'intensité lumineuse, mais qui présente de meilleurs performances optiques que le dispositif de FR 2 526 258.

Pour cela, on propose que ce moyen d'éclairage comporte un projecteur d'enrichissement et que cette commande à deux niveaux d'alimentation soit appliquée au projecteur d'enrichissement.

Il s'avère en effet qu'un projecteur spécifiquement façonné pour l'enrichissement peut être utilisé pour compléter le faisceau de base dans plusieurs modes d'éclairage au lieu d'un, ce qui permet, en renforçant plus généralement l'effet du projecteur de base, de réduire le dimensionnement de ce dernier. On gagne donc en performances par rapport à FR 2 526 258, et on gagne en encombrement par rapport aux montages classiques projecteur de base / projecteur d'enrichissement.

Un ensemble d'éclairage selon l'invention est un ensemble d'éclairage de véhicule automobile incluant un projecteur et des moyens de commande aptes à mettre en oeuvre au moins deux modes d'alimentation correspondant à deux intensités lumineuses différentes et non nulles de ce projecteur, caractérisé en ce que ce projecteur est un projecteur apte à engendrer un faisceau venant enrichir un autre faisceau.

On propose également un ensemble d'éclairage de véhicule automobile incluant un projecteur de base et des moyens de commande de projecteur aptes à alimenter un projecteur selon deux modes correspondant à deux intensités lumineuses distinctes non nulles de ce projecteur, caractérisé en ce qu'il inclut en outre un projecteur d'enrichissement et en ce que les dits moyens de commande sont appliqués à ce projecteur d'enrichissement.

D'autres caractéristiques, buts et avantages de l'invention apparaîtront à la lecture de la description détaillée qui va suivre, faite en référence aux figures annexées sur lesquelles :
- la figure 1 est un schéma de montage électrique d'un ensemble d'éclairage à enrichissement en virage (« Bending Light ») selon l'art antérieur ;
- la figure 2 est un schéma de montage électrique d'un ensemble d'éclairage « Bending Light » selon un mode de réalisation de l'invention ;
- la figure 3 est un schéma de montage électrique d'un générateur de surtension selon un mode de réalisation de l'invention.

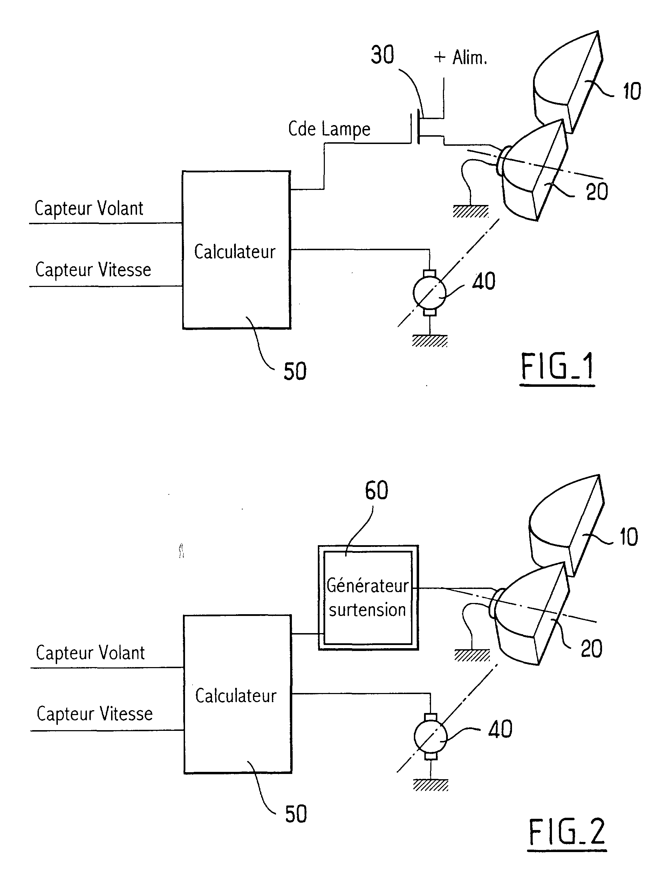

L'ensemble d'éclairage de type « Bending Light » représenté à la figure 1 présente classiquement un projecteur de base 10, un projecteur d'enrichissement 20, un interrupteur d'alimentation 30 du projecteur d'enrichissement 20, et un moteur 40 d'orientation du projecteur 20.

Un calculateur 50 est prévu pour commander le moteur d'orientation 40 en fonction de la courbure de virage, et pour commander la fermeture de l'interrupteur 30 lorsque la courbure du véhicule dépasse un seuil choisi, le véhicule ayant au moins une vitesse minimale.

Dans le mode de réalisation de l'invention qui est représenté à la figure 2, l'interrupteur 30 est remplacé par une générateur de surtension 60.

Le calculateur 50 commande ici un changement de tension d'alimentation du projecteur 20 parmi deux tensions non nulles, et non pas entre seulement un niveau d'alimentation et une coupure.

Le générateur 60 est tel que lorsqu'il est inactif, il alimente le projecteur 20 avec une valeur de tension d'alimentation Valim qui est celle fournie aux bornes du projecteur de base 10, typiquement une tension de batterie de 12 volts.

Lorsque le générateur 60 est activé, le projecteur 20 est alimenté avec une valeur de tension d'alimentation supérieure à Valim, de sorte que le projecteur 20 superpose au faisceau généré par le projecteur 10 un faisceau d'enrichissement de luminance élevée.

Ainsi, selon que le surgénérateur soit actif ou inactif, le faisceau fourni par le projecteur 10 est complété plus ou moins fortement.

La commande du surgénérateur 60 est ici effectuée de la même façon que la commande de l'interrupteur 30 du dispositif de l'art antérieur (figure 1).

Ainsi, dans la situation ou le projecteur de base 10 éclairait seul la route dans l'art antérieur, il est ici aidé par le projecteur d'enrichissement 20, au niveau de luminance le plus faible.

En changeant le niveau de luminance du projecteur d'enrichissement 20, on utilise celui-ci dans un plus grand nombre de situations, et même dans le présent exemple, dans toutes les situations où un éclairage de la route par feux de croisement est requis.

Aidant le projecteur de base 10 dans un plus grand nombre de situations, on peut prévoir une diminution de la capacité lumineuse de ce dernier, et donc un gain en encombrement par rapport aux ensembles à projecteur d'enrichissement classiques.

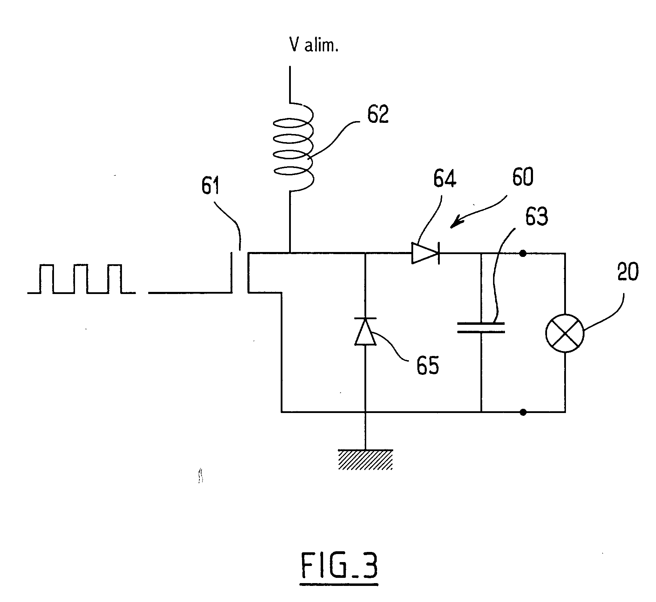

On présente à la figure 3 un exemple préféré de surgénérateur de tension, mais tout autre surgénérateur peut être utilisé, par exemple l'un de ceux proposé dans FR 2 526 258.

Le surgénérateur 60 de la figure 3 est principalement basé sur l'utilisation d'un transistor de puissance 61 associé à une inductance 62, tous deux placés entre la tension nominale Valim et le neutre.

Ce transistor 61 est similaire à un transistor utilisé en tant qu'interrupteur de puissance 30 dans la figure 1.

Il est d'ailleurs placé en sortie directe du calculateur 50.

Le transistor 61 reçoit du calculateur 50 un signal à impulsions carré. Le surgénérateur comprend en outre une capacité 63. A chaque impulsion, l'interrupteur 61 se ferme et l'inductance 62 fournit à la capacité 63, par résonance avec celle-ci, une charge électrique par l'intermédiaire de la diode 64.

La tension aux bornes de la capacité 63, placée en parallèle de la lampe du projecteur 20, est déterminée par la fréquence et le rapport cyclique des impulsions.

Lorsque l'interrupteur 61 est maintenu ouvert, la capacité 63 se décharge une seule fois, une intensité constante s'installe dans l'inductance 62, et la lampe du projecteur 20 est alimentée avec une tension sensiblement égale à la tension nominale Valim.

Pour une description plus précise de ce circuit, on notera les éléments suivants.

L'interrupteur 61 et l'inductance 62 sont en série entre une source à Valim et le neutre, et la capacité 63 est en parallèle de l'interrupteur 61.

Une des bornes de la capacité 63 est plus précisément reliée entre interrupteur 61 et inductance 62 par l'intermédiaire de la diode 64, qui est passante vers la capacité 63.

Une diode 65, prévue pour limiter la tension aux bornes de la capacité 63, est placée en parallèle de cette dernière, une des bornes de cette diode 65 étant reliée à la borne correspondante de la capacité 63 par l'intermédiaire de la diode 64. Le sens passant de la diode 65 pointe vers l'inductance 62.

Ce générateur de surtension 60 peut être utilisé pour délivrer sur la lampe du projecteur 20 une tension inférieure à Valim, par un choix adéquat de la fréquence et/ou du rapport cyclique du signal délivré par le calculateur 50.

Selon une variante, on applique ainsi sur la lampe une tension inférieure à Valim dans le mode d'éclairage ordinaire.

On prévoit également en variante un sous-voltage pour une rotation faible du réflecteur « Bending Light » 20 et un sur-voltage pour une rotation forte. Toutefois, le projecteur d'enrichissement peut être un projecteur « Bending Lighting » de type fixe.

On prévoit également en variante une modulation progressive de la tension appliquée sur la lampe.

L'invention n'est pas limitée au « Bending Light ».

Elle concerne bien sûr les autres modes d'enrichissement de faisceau, notamment « Motorway Lighting », « Adverse weather Lighting », « Town Lighting », connues avec le « Bending Light » sous l'abréviation « AFS » .

Le « Town Lighting », lorsqu'il fait usage du projecteur du « Bending Lighting », profite facilement de la solution proposée dans l'exemple de réalisation particulier ci-dessus.

D'autre part, l'invention concerne également les dispositifs à enrichissement bref de l'éclairage, par exemple par surtension brève, visant à obtenir un accroissement temporaire des performances optiques d'éclairage, notamment dans les cas d'éblouissement du conducteur.

La lampe du projecteur d'enrichissement 20 peut être quelconque, par exemple lampe à filament, lampe à xénon, diode électroluminescente blanche.

L'alimentation de la lampe avec une forte surtension tendant à réduire sa durée de vie, surtout pour les filaments de lampes halogènes, on prévoit avantageusement que le calculateur 50 soit programmé pour appliquer cette surtension pendant une durée limitée.

## Revendications

1. Ensemble d'éclairage de véhicule automobile incluant un projecteur (10,20) et des moyens de commande (50,60) aptes à mettre en oeuvre au moins deux modes d'alimentation correspondant à deux intensités lumineuses différentes et non nulles de ce projecteur (10,20), **caractérisé en ce que** ce projecteur (10,20) est un projecteur conçu pour générer une zone d'éclairage spécifiquement choisie pour enrichir un faisceau de base, zone d'éclairage insuffisamment large pour un éclairage correct à elle seule de la route.

2. Ensemble d'éclairage selon la revendication précédente, **caractérisé en ce que** les moyens de commande (50,60) incluent des moyens (50,60) aptes à élever une tension de réseau de bord dans au moins un des deux modes d'alimentation du projecteur (20).

3. Ensemble selon la revendication 2, **caractérisé en ce que** lesdits moyens d'élévation de tension (50,60) sont également prévus pour mettre en oeuvre une réduction de tension dans au moins un des deux modes d'alimentation du projecteur (20).

4. Ensemble selon l'une quelconque des revendications précédentes, **caractérisé en ce qu'**il inclut des moyens (50) présentant une entrée prévue pour recevoir une information indicatrice de la courbure suivie par le véhicule, et prévus pour déplacer latéralement le faisceau d'enrichissement (20) en fonction de ces données.

5. Ensemble selon l'une quelconque des revendications précédentes, **caractérisé en ce que** les moyens de commande (50,60) présentent une entrée de réception d'un signal d'activation et sont aptes, lorsqu'ils sont en état activé, à appliquer en permanence une alimentation non nulle au projecteur d'enrichissement (20).

6. Ensemble selon l'une quelconque des revendications précédentes, **caractérisé en ce que** les moyens de commande (50,60) incluent un premier module (50) apte à délivrer un signal à impulsions, et un second module (60) placé en aval du premier module (50), qui est prévu pour délivrer une tension plus ou moins élevée en fonction de la forme du signal à impulsions.

7. Ensemble selon la revendication précédente, **caractérisé en ce que** ledit second module (60) comprend un élément inductif (62), un élément capacitif (63), un élément de blocage de courant (64) placé de manière à bloquer un courant dans un sens donné entre l'élément inductif (62) et l'élément capacitif (63), et un interrupteur (61) placé pour autoriser ou non un résonance entre l'élément inductif (62) et l'élément capacitif (63).

8. Ensemble selon l'une quelconque des revendications précédentes, **caractérisé en ce que** les moyens de commande (50,60) sont prévus pour limiter la durée d'alimentation du projecteur d'enrichissement (20) dans un mode à haute intensité lumineuse en dessous d'un durée maximale déterminée.

9. Ensemble selon l'une quelconque des revendications précédentes, **caractérisé en ce que** le projecteur (20) est apte à engendrer un faisceau venant enrichir un faisceau de croisement (10).

10. Ensemble d'éclairage de véhicule automobile incluant un projecteur de base (10) et des moyens de commande (50,60) de projecteur aptes à alimenter un projecteur (10,20) selon deux modes correspondant à deux intensités lumineuses distinctes non nulles de ce projecteur (10,20), **caractérisé en ce qu'**il inclut un projecteur (20) conçu pour générer une zone d'éclairage spécifiquement choisie pour enrichir le faisceau du projecteur de base, zone d'éclairage insuffisamment large pour un éclairage correct à elle seule de la route, et **en ce que** les dits moyens de commande (50,60) sont appliqués à ce projecteur d'enrichissement (20).
